# EUROPÄISCHE PATENTSCHRIFT

(11) **EP 2 665 646 B1**
(45) Veröffentlichungstag und Bekanntmachung des Hinweises auf die Patenterteilung: **08.08.2018**
(21) Anmeldenummer: 12708710.4
(22) Anmeldetag: 18.01.2012
(51) Int. Cl.: B64D 9/00

(54) **LADESYSTEM FÜR EIN FLUGZEUG UND VERFAHREN ZUR FÖRDERUNG EINES FRACHTSTÜCKS AUF EINEM FRACHTDECK**
LOADING SYSTEM FOR AN AIRCRAFT, AND METHOD FOR CONVEYING A PIECE OF CARGO ON A CARGO DECK
SYSTÈME DE CHARGEMENT D'UN AVION ET PROCÉDÉ DE TRANSPORT D'UNE MARCHANDISE DE FRET SUR UNE PLATE-FORME DE CHARGEMENT

(30) Priorität: 19.01.2011 DE 102011000221; 18.02.2011 DE 102011000819
(43) Veröffentlichungstag der Anmeldung: 27.11.2013
(73) Patentinhaber: Telair International GmbH, 83714 Miesbach (DE)
(72) Erfinder: HUBER, Thomas, 83727 Schliersee (DE)
(74) Vertreter: Bohnenberger, Johannes
(86) Internationale Anmeldenummer: PCT/EP2012/050716
(87) Internationale Veröffentlichungsnummer: WO 2012/098161

(56) Entgegenhaltungen:
- WO-A2-2007/106191
- DE-A1-102005 026 898
- US-A1- 2009 121 084
- US-A1- 2010 100 225

## Beschreibung

Die Erfindung betrifft ein Ladesystem für ein Flugzeug und ein Verfahren zur Förderung eines Frachtstücks auf einem Frachtdeck.

Zum Transport von Luftfracht werden die zu transportierenden Frachtstücke, insbesondere Container oder Paletten, die vorzugsweise nach bestimmten Normen gefertigt sind, innerhalb des Frachtraums mittels Riegelelementen am Frachtdeck des Frachtraums befestigt. Derartige Riegelelemente bilden häufig Frachtladebahnen aus, zwischen denen die genormten Frachtstücke positioniert werden können. Um die Frachtstücke an den für sie vorgesehenen Positionen zu positionieren, werden Ladesysteme verwendet, die das Bodenpersonal beim Be- und Entladen unterstützen. Die Ladesysteme sollen den Be- und Entladevorgang beschleunigen und verfügen häufig über eine Vielzahl von Aktuatoren und Sensoren sowie über einen Steuercomputer der dazu ausgebildet ist, die empfangenen Signale auszuwerten, gegebenenfalls auszugeben und eine geeignete Steuerstrategie für die Aktuatoren zu implementieren. Die verwendeten Ladesysteme müssen sehr einfach zu bedienen sein, da das Bodenpersonal häufig keine Einweisungen bezüglich eines spezifischen Ladesystems genossen hat. Hinzu kommt, dass sowohl das Be- als auch das Entladen unter hohem Zeitdruck geschieht, wodurch es leicht zu einer Fehlbedienung kommen kann. Derartige Fehlbedienungen müssen zwingend verhindert werden.

Ein defektes Ladesystem, sei es aufgrund von Fehlbedienung oder aufgrund von einer natürlichen Abnutzung, kann zu erheblichen Kosten führen, da das Unterhalten von Großraumflugzeugen sehr teuer ist. Jede Minute, die ein Großraumflugzeug auf dem Boden verbringt, kostet den Betreiber Geld. Des Weiteren kann ein defektes Frachtladesystem oder eine Fehlbedienung dazu führen, dass beispielsweise Abschnitte des Frachtladeraums beschädigt werden. Eine Instandsetzung des Frachtladeraums ist sehr teuer.

Häufig werden Frachtstücke auf einem Frachtdeck verladen, die derartige Abmessungen haben, dass es notwendig ist, die Frachtstücke, insbesondere im Bereich nahe der Tür zu drehen. Der Bereich nahe der Tür, man spricht hier auch vom Be- und Entladebereich, ist hierfür mit besonderen Funktionselementen, umfassend Frachtfördereinrichtungen (z.B. PDUs: Power Drive Units) und Rollenmatten ausgestattet. Es gibt unterschiedliche Strategien, wie das Drehen der Frachtstücke in dem räumlich stark beschränkten Be- und Entladebereich bewerkstelligt wird. Entsprechende Frachtladesysteme bzw. Ladesysteme zum Drehen von Frachtstücken sind aus der US 4,050,655, DE 10 2005 008 443 B4, DE 10 2005 021 078 B4, DE 10 2008 052 468 A1 und DE 101 58 298 C1 bekannt.

So ergibt sich beispielsweise aus der US 4,050,655 ein Ladesystem für ein Flugzeug, das einen Steuercomputer und eine Vielzahl von mit dem Steuercomputer kommunikativ verbundenen Frachtfördereinrichtungen umfasst. Der Steuercomputer betreibt die Frachtfördereinrichtungen derart, dass die Frachtstücke in geeigneter Weise auf dem Frachtladedeck positioniert werden. Des Weiteren ermöglicht der Steuercomputer ein schnelles und einfaches Entladen. Der Steuercomputer steht ebenfalls in kommunikativer Verbindung mit einer Eingabeeinrichtung, nämlich einem Paneel mit einer Vielzahl von Knöpfen und einem Joystick, der es dem Benutzer ermöglicht, den Be- und Entladevorgang manuell vorzunehmen. Die vorgesehene Eingabeeinrichtung lässt sich mit Handschuhen, die beim Be- und Entladen vorgeschrieben sind, nur schwer bedienen. Des Weiteren ist die Bedienung der Eingabeeinrichtung nicht unbedingt intuitiv, so dass der Benutzer entsprechend geschult werden muss. Dokument US 2009/121084, das als nächstliegender Stand der Technik angesehen wird, offenbart alle Merkmale des Oberbegriffs des Anspruchs 1. Es ist Aufgabe der vorliegenden Erfindung, ein verbessertes Ladesystem bereitzustellen, das sich insbesondere leicht und intuitiv bedienen lässt und eine zumindest teilweise automatische Be- und Entladung von Frachtstücken gewährleistet.
Diese Aufgabe wird durch ein Ladesystem gemäß dem Anspruch 1 sowie durch ein Verfahren gemäß dem Anspruch 10 gelöst.

Insbesondere wird die Aufgabe durch ein Ladesystem für ein Flugzeug gelöst. Ein zentraler Gedanke der vorliegenden Erfindung besteht darin, die Eingabeeinrichtung in Form eines Touchscreens auszubilden.

Insofern ist es möglich, Eingaben komfortabel direkt an einem Bildschirm mit den Fingern vorzunehmen. Die angezeigten Elemente auf dem Touchscreen können in Abhängigkeit von der Ladephase (z.B. beim Beladen oder Entladen) derart abgewandelt werden, dass der Bedienkomfort erhöht wird. Des Weiteren ermöglicht es ein Touchscreen entscheidende Informationen anzuzeigen, während er gleichzeitig als Eingabeeinrichtung fungiert. Dies kann dazu beitragen, eine Fehlbedienung zu vermeiden.

Das Frachtladesystem kann Sensoreinrichtungen zur Erfassung einer Istposition des zu verladenden Frachtstücks umfassen. Beispielsweise kann mittels der Sensoreinrichtungen festgestellt werden, wo sich ein Frachtstück auf dem Frachtdeck bzw. bezüglich des Frachtdecks befindet. Die Sensoreinrichtungen können dem Steuercomputer beispielsweise melden, dass ein Abschnitt des Frachtstücks gerade die Frachtladeluke passiert hat, so dass der Steuercomputer anhand dieser Information eine Istposition des Frachtstücks ermitteln kann. Der Touchscreen ist derart vom Steuercomputer angesteuert, dass der Touchscreen zumindest einen Umriss des Frachtstücks anzeigt. Der Benutzer des Ladesystems kann dann mittels des Touchscreens das Frachtstück oder einen Abschnitt eines Frachtstücks auswählen und/oder zumindest eine Förderrichtung und/oder eine Förderbahn vorgeben. Vorzugsweise kann die Benutzereingabe also darin bestehen, dass der Benutzer beispielsweise mit seinem Finger den auf dem Bildschirm des Touchscreens angezeigten Umriss des Frachtstücks auswählt und dann in eine bestimmte Sollposition zieht. Alternativ können auch lediglich Abschnitte des Umrisses des Frachtstücks ausgewählt und mittels eines Fingers verschoben werden. Vorzugsweise implementiert der Steuercomputer in Abhängigkeit von der Benutzereingabe eine geeignete Steuerstrategie, so dass das Frachtstück in entsprechender Weise auf dem Frachtladedeck mittels der Frachtfördereinrichtungen transportiert wird. Die vorgegebene Förderrichtung muss nicht zwingend einem Vektor entsprechen. Theoretisch ist es auch möglich, eine gekrümmte Bahn oder Ähnliches vorzugeben.

Der Touchscreen kann dazu ausgebildet sein, mindestens zwei Berührungspunkte zeitgleich zu erfassen, so dass ein Benutzer des Ladesystems eine Rotationsbewegung vorgeben kann. Beispielsweise ist es möglich, den Touchscreen derart auszubilden, dass er die Koordinaten von zwei Fingern auf dem Touchscreen erfasst und deren Bewegung über die Zeit verfolgt. So können Rotationsbewegungen auf einfache und effiziente Weise vorgegeben werden.

Der Steuercomputer kann dazu ausgebildet sein, unter Berücksichtigung der Benutzereingaben eine Förderstrategie zu berechnen und die Frachtfördereinrichtung zur Umsetzung der Förderstrategie zu betreiben. Der Steuercomputer setzt also eine auf dem Touchscreen vorgegebene Bewegung und/oder Rotation des Frachtstücks durch ein geeignetes Ansteuern der Frachtfördereinrichtungen um.

Der Steuercomputer kann dazu ausgebildet sein, die Frachtfördereinrichtung nur so lange zu betreiben, solange von dem Touchscreen eine Berührung durch den Benutzer detektiert wird. So kann der Benutzer beispielsweise eine Bewegungsrichtung mittels eines Fingers vorgeben. Der Steuercomputer fängt dann an, die Fördereinrichtungen derart zu betreiben, dass das Frachtstück auf dem Frachtdeck in geeigneter Weise verschoben und/oder gedreht wird. Der Steuercomputer kann derart ausgebildet sein, dass er das Fördern des Frachtstücks nur so lange betreibt, bis die vom Benutzer vorgegebene Zielposition erreicht ist oder dieser seinen Finger von dem Touchscreen entfernt. Insofern kann ein Sicherheitsmechanismus implementiert werden, der ein schnelles Stoppen des Frachtstücks auf dem Frachtdeck ermöglicht, so dass eine Beschädigung des Flugzeugs, der Frachtstücke und/oder eine Gefährdung des Personals vermieden werden.

Soweit der Touchscreen dazu ausgebildet ist, die Koordinaten von mindestens zwei Berührungspunkten zu ermitteln, kann das Betreiben der Fördereinrichtungen dann abgebrochen werden, wenn nur noch ein Finger auf dem Touchscreen oder kein Finger auf dem Touchscreen aufliegt.

Der Touchscreen kann derart ausgebildet und/oder vom Steuercomputer angesteuert werden, dass der Touchscreen zumindest einen Abschnitt des Frachtladedecks anzeigt, so dass ein Benutzer des Ladesystems mittels des Touchscreens zumindest eine Zielposition, insbesondere eine Frachtladebahn, auswählen kann. Vorzugsweise unterstützt das erfindungsgemäße Ladesystem eine manuelle und eine automatische Verladung von Frachtstücken. Bei der automatischen Verladung wird durch den Benutzer lediglich eine Zielposition, beispielsweise in Form von einer Auswahl einer Frachtladebahn vorgegeben, wobei der Steuercomputer selbstständig eine Steuerstrategie entwickelt, die dazu führt, dass das Frachtstück aus einer Istposition in die vorgegebene Zielposition gefahren wird. Beim Ausladen kann diese Zielposition auch außerhalb des Flugzeugs liegen.

Das Ladesystem kann Sensoreinrichtungen zur Erfassung der Frachtstückart und/oder einer Abmessung, insbesondere der Bodenflächen, des Frachtstücks umfassen. In einem Ausführungsbeispiel kann die Bodenfläche beispielsweise beim Einfahren in das Flugzeug vermessen und beim Entwickeln einer geeigneten Steuerstrategie von dem Steuercomputer berücksichtigt werden. Alternativ können entsprechende Abmessungen in einem digitalen Speicher am Frachtstück hinterlegt werden, so dass diese Abmessungen vom Steuercomputer ausgelesen werden können. Des Weiteren ist es möglich, Identifikationsnummern, die sich beispielsweise auf die Frachtstückart beziehen, im oder am Frachtstück zu hinterlegen, und diese Nummern mit einer Datenbank abzugleichen, die die Abmessungen in Abhängigkeit von der Identifikationsnummer bereitstellt. Es ist denkbar, mittels der Sensoreinrichtungen Informationen bezüglich der Abmessungen der Bodenfläche des Frachtstücks zu gewinnen. Andererseits können auch Informationen gewonnen werden, die es ermöglichen, ein dreidimensionales Abbild des Frachtstücks zu erzeugen, so dass beim Ver- oder Entladen des Frachtstücks eine Kollision beispielsweise mit der Außenhaut des Flugzeugs effizient vermieden werden kann.

Die anfangs genannte Aufgabe wird des Weiteren durch ein Verfahren zur Förderung eines Frachtstücks auf einem Frachtdeck gelöst, das die folgenden Schritte umfasst:
- Empfangen mindestens einer mittels eines Touchscreens eingegebenen Benutzereingabe durch einen Steuercomputer;
- Berechnen einer Steuerstrategie in Abhängigkeit von der Benutzereingabe;
- Betreiben einer Anzahl von Frachtfördereinrichtungen gemäß der Steuerstrategie.

Es ergeben sich ähnliche Vorteile, wie diese bereits in Verbindung mit der Vorrichtung beschrieben wurden.

Das Verfahren kann auch ein Empfangen einer Vielzahl von Sensorsignalen zur Bestimmung einer Istposition des Frachtstücks auf dem Frachtdeck durch den Steuercomputer und ein Anzeigen der Istposition des Frachtstücks auf dem Touchscreen, insbesondere in Bezug auf die Ausgestaltung zumindest eines Teils des Frachtdecks, umfassen. Für den Benutzer ist es also möglich, eine Istposition des Frachtstücks anhand der Anzeige auf dem Touchscreen abzuleiten und durch geeignete Eingaben eine Förderrichtung oder eine Förderstrategie vorzugeben.

Vorzugsweise wird die Istposition des Frachtstücks in Echtzeit aktualisiert, so dass dem Benutzer stets eine aktuelle Position des Frachtstücks auf dem Touchscreen angezeigt wird.

Das Betreiben der Anzahl von Frachtfördereinrichtungen kann in einem Ausführungsbeispiel nur so lange erfolgen, solange der Touchscreen eine Berührung des Benutzers detektiert. Sobald der Touchscreen feststellt, dass der Benutzer diesen nicht mehr berührt, kann der Transport des Frachtstücks eingestellt werden.

Das Verfahren kann ein Erfassen einer Frachtstückart und/oder zumindest einer Abmessung des Frachtstücks durch mindestens eine Sensoreinrichtung und ein Berücksichtigen der Frachtstückart und/oder der Abmessung bei der Berechnung der Steuerstrategie umfassen. Beispielsweise kann der Steuercomputer ein digitales Abbild des Frachtstücks generieren und eine geeignete Steuerstrategie entwickeln, die das Frachtstück ohne eine Kollision mit dem Flugzeug aus der Istposition in eine durch den Benutzer vorgegebene Sollposition transportiert. Die Benutzereingabe kann eine Vorgabe einer Beschleunigungsrichtung und einer Beschleunigungskraft umfassen und der Steuercomputer kann anhand der Benutzereingabe eine Förderrichtung und einen Förderzeitraum bestimmen. Beispielsweise ist es möglich, dass der Benutzer durch seine Eingabe einen Bewegungsvektor einer bestimmten Länge vorgibt. Der Steuercomputer kann dann eine Steuerstrategie entwickeln, um das Frachtstück in die vorgegebene Richtung zu transportieren. Die Distanz, die das Frachtstück in die vorgegebene Richtung transportiert wird, kann beispielsweise in Abhängigkeit von der Länge des Vektors bestimmt werden. Vorzugsweise erfolgt zuerst eine schnelle Förderung des Frachtstücks in die vorgegebene Richtung, wobei die Geschwindigkeit mit zunehmender Zeit langsam abnimmt, so dass es zu einem "Ausrollen" des Frachtstücks auf dem Frachtdeck kommt.

Die oben genannte Aufgabe wird des Weiteren durch ein Ladesystem für ein Flugzeug, umfassend eine Fernbedienung zum Empfangen von Benutzereingaben und eine drahtlose Kommunikationsschnittstelle zur Weiterleitung der Benutzereingaben an einen Steuercomputer, gelöst.

Vorzugsweise wird die drahtlose Kommunikation zumindest durch eine Sendeeinrichtung an der Fernbedienung und durch eine Empfangseinrichtung an mindestens einer Frachtfördereinrichtung gelöst. Vorzugsweise erfolgt diese drahtlose Kommunikation mittels Lichtwellen, insbesondere im Infrarotbereich. Die Frachtfördereinrichtung kann hierfür entsprechende Fotodioden umfassen. Diese Fotodioden können auch als Sensormittel genutzt werden, um die Anwesenheit eines Frachtstücks, insbesondere oberhalb der Frachtfördereinrichtung, zu detektieren. Die Sensormittel nehmen also eine Doppelfunktion zum einen als Empfänger und/oder Sender, zum andern als Detektionseinrichtung wahr.

Weitere vorteilhafte Ausführungsformen ergeben sich anhand der Unteransprüche.

Nachfolgend wird die Erfindung anhand von mehreren Ausführungsbeispielen beschrieben, die mittels mehrerer Abbildungen näher verdeutlicht werden.

Hierbei zeigen:
- Fig. 1: eine Draufsicht auf einen Abschnitt eines Frachtdecks mit zahlreichen Frachtfördereinrichtungen;
- Fig. 2: eine erste Abbildung auf einem Touchscreen, der als Eingabeeinrichtung für einen Steuercomputer ausgebildet ist;
- Fig. 3: eine zweite Abbildung auf dem Touchscreen aus Fig. 2;
- Fig. 4: eine schematische Darstellung eines Ladesystems, umfassend einen Steuercomputer, einen Touchscreen als Eingabeeinrichtung, zahlreiche Sensoren und Aktuatoren;
- Fig. 5: eine schematische Darstellung eines Frachtstücks;
- Fig. 6: eine Detailansicht einer Frachtfördereinrichtung aus Fig. 1; und
- Fig. 7: eine Fernbedienung zur Steuerung des Steuercomputers.

In der nachfolgenden Beschreibung werden für gleiche und gleich wirkende Teile dieselben Bezugsziffern verwendet.

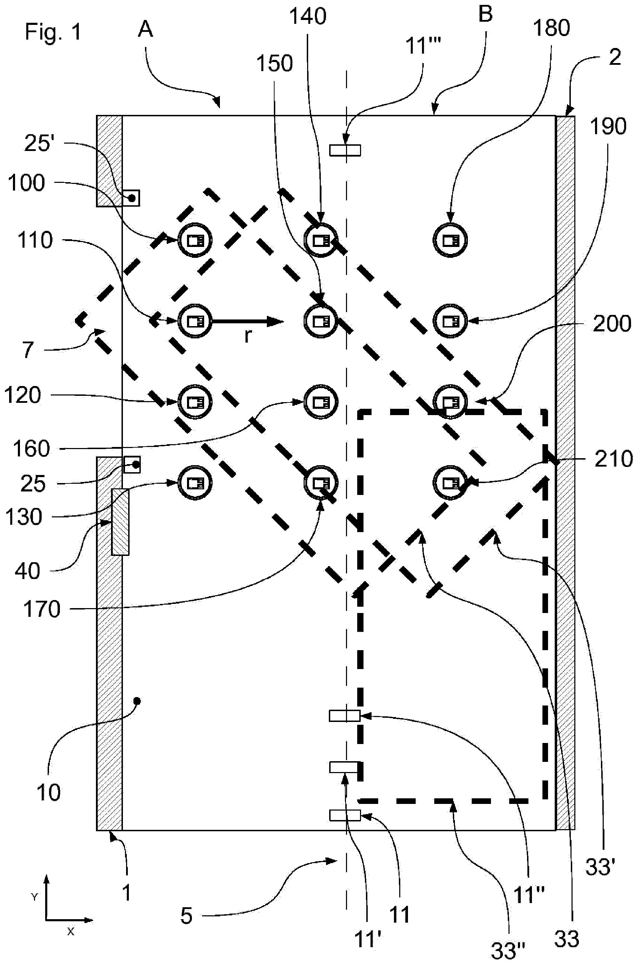

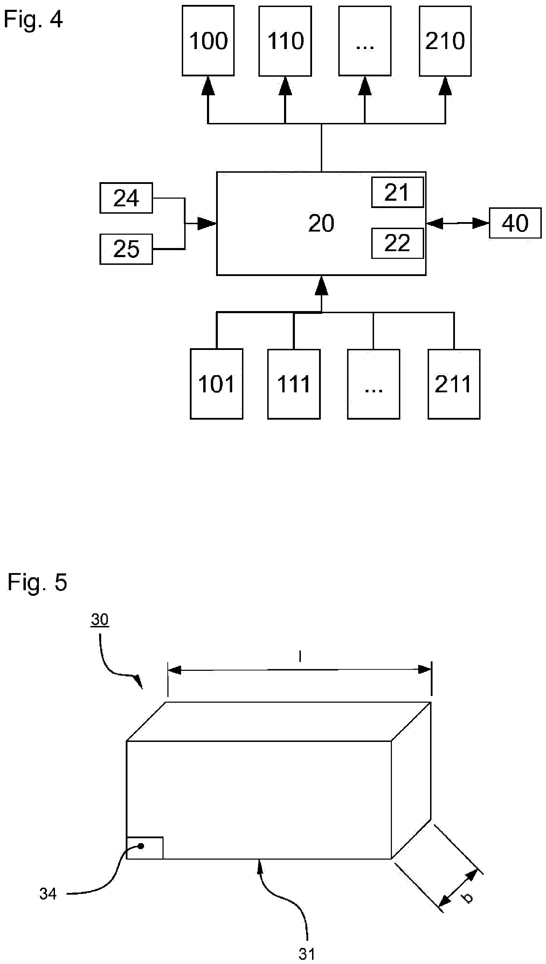

Die Fig. 1 zeigt eine Draufsicht auf ein Frachtdeck 10 mit einem erfindungsgemäßen Frachtladesystem. Der gezeigte Abschnitt des Frachtdecks 10 ist im Wesentlichen rechteckig und erstreckt sich in der x-y-Ebene (die y-Richtung entspricht der Längsrichtung des Flugzeugs und die x-Richtung der Querrichtung) des Flugzeugs und ist durch eine linke Seitenwand 1 und eine rechte Seitenwand 2 begrenzt. Die linke Seitenwand 1 ist abschnittsweise zur Bildung einer Türöffnung 7 unterbrochen und weist einen Touchscreen 40 als Eingabeeinrichtung auf. Durch die Türöffnung 7 kann ein Frachtcontainer 30, wie dieser in Fig. 5 gezeigt wird, in den Frachtraum eingebracht werden. Das erfindungsgemäße Frachtladesystem ist besonders dafür geeignet, sperrige Container, die zur Verstauung innerhalb des Frachtraums gedreht werden müssen, zu transportieren. Das Frachtladesystem oder Ladesystem kann jedoch auch in Verbindung mit deutlich kleineren Frachtcontainern 30 mit beliebigen Abmessungen verwendet werden. Der in Fig. 5 gezeigte Frachtcontainer 30 hat eine Länge l, die deutlich länger ist als die Breite des in Fig. 1 gezeigten Frachtdecks 10, so dass der Frachtcontainer 30 beim Verladen im Be- und Entladebereich unter Verwendung des zusätzlichen Platzes, den die Türöffnung 7 bietet, gedreht werden muss.

Das Frachtdeck 10 des in Fig. 1 gezeigten Flugzeugs ist so konfiguriert, dass eine erste Frachtladebahn A und eine zweite Frachtladebahn B zur Aufnahme einzelner Frachtcontainer 30 bereitsteht. Hierfür sind entlang einer Mittelebene 5 des Frachtdecks 10 Mittelriegel 11, 11', 11", 11'" angeordnet. Die Frachtladebahnen A, B haben eine Breite, die im Wesentlichen mit der Breite b des Frachtcontainers 30 korrespondiert. Üblicherweise sind weitere Funktionselemente vorgesehen, um die Frachtcontainer 30 in geeigneter Weise in den Frachtladebahnen A, B zu halten.

Der Be- und Entladebereich des Frachtdecks 10 der Fig. 1 ist mit 12 Frachtfördereinrichtungen 100, 110, 120, ..., 210 ausgestattet. Diese Frachtfördereinrichtungen 100, 110, 120, ..., 210 sind über den Be- und Entladebereich verteilt. Vorzugsweise sind die Frachtfördereinrichtungen 100, 110, 120, ..., 210 so über den Be- und Entladebereich verteilt, dass ein zu verladender Frachtcontainer 30 mit einem Frachtbodenumriss 33, 33', 33" unabhängig von seiner Position stets mindestens zwei vorzugsweise mindestens drei Frachtfördereinrichtungen 100, 110, 120, ..., 210 überdeckt. In der in Fig. 1 gezeigten Konfiguration sind die Frachtfördereinrichtungen 100, 110, 120, ..., 210 in einem Raster angeordnet, das eine Vielzahl von Zeilen (in x-Richtung) und Spalten (in y-Richtung) umfasst. Jede Zeile der in Fig. 1 gezeigten Konfiguration umfasst drei Frachtfördereinrichtungen 100, 110, 120, ..., 210 und jede Spalte vier Frachtfördereinrichtungen 100, 110, 120, ..., 210.

Es sollte für den hier tätigen Fachmann offensichtlich sein, dass eine beliebige andere Verteilung der Frachtfördereinrichtungen 100, 110, 120, ..., 210 gewählt werden kann, um eine flächige Abdeckung des Be- und Entladebereichs zu erreichen. So können vier, fünf, sechs, acht oder deutlich mehr Frachtfördereinrichtungen 100, 110, 120, ..., 210 in jeder Spalte oder in jeder Zeile verbaut werden. Des Weiteren ist es möglich, die Frachtfördereinrichtungen 100, 110, 120, ..., 210 in symmetrischen und asymmetrischen Konfigurationen anzuordnen, so dass die speziellen Anforderungen des jeweiligen Frachtraums erfüllt werden. Die in Fig. 1 gewählte regelmäßige Konfiguration hat den Vorteil, dass sich die einzelnen Positionen der Frachtfördereinrichtungen 100, 110, 120, ..., 210 auf dem Frachtdeck 10 leicht erfassen lassen. Dennoch wäre es theoretisch auch möglich, ein beliebiges Netz aus Frachtfördereinrichtungen 100, 110, 120, ..., 210 zur Ausstattung des Be- und Entladebereichs zu verwenden und die entsprechenden Positionen zu erfassen.

Wechselseitig zur Türöffnung 7 sind RFID-Sensoreinrichtungen 25, 25' angeordnet, die ein RFID-Tag 34 am Frachtcontainer 30 (vgl. Fig. 5) erfassen können. Insofern ist es einem mit den RFID-Sensoreinrichtungen 25, 25' verbundenen Steuercomputer 20 möglich, einen einfahrenden Frachtcontainer 30 eindeutig zu identifizieren. Eine gewonnene Identifikationsnummer kann dazu verwendet werden, die Frachtcontainerbreite b und die Frachtcontainerlänge l - also die Abmessungen - des Frachtcontainers 30 zu bestimmen. Alternativ kann das RFID-Tag 34 konkrete Informationen bezüglich dieser Abmessungen umfassen. In einem weiteren Ausführungsbeispiel kann ein Laserscanner an der Türöffnung 7 oder an einer beliebigen anderen geeigneten Position angeordnet sein, um die Abmessungen des einfahrenden Frachtcontainers 30 zu bestimmen.

Die Frachtfördereinrichtungen 100, 110, 120, ..., 210 sind dazu ausgebildet, den einfahrenden Frachtcontainer 30 zu transportieren und in eine vorgegebene Position innerhalb der Frachtladebahnen A, B zu verschieben. In der Fig. 1 sind Frachtbodenumrisse 33, 33', 33" schematisch dargestellt. Es zeigt sich, dass der bereits leicht quergestellte Frachtcontainer 30 bezüglich des ersten Frachtbodenumrisses 33 entlang der x-Achse mittels der Frachtfördereinrichtungen 100, 110, 120, ..., 210 verschoben wurde, um die durch den zweiten Frachtbodenumriss 33' verdeutlichte Position einzunehmen. Der dritte Frachtbodenumriss 33" zeigt eine potentielle Zielposition an. Bei den verwendeten Frachtfördereinrichtungen 100, 110, 120, ..., 210 kann es sich beispielsweise um solche handeln, wie diese in der DE 198 07 229 A1 beschrieben sind.

Wie in der Fig. 4 gezeigt, stehen die Frachtfördereinrichtungen 100, 110, 120, ..., 210 mit einem Steuercomputer 20 in kommunikativer Verbindung, so dass der Steuercomputer 20 diese einzeln oder in Gruppen ansteuern kann. Des Weiteren ist es möglich, die Frachtfördereinrichtungen 100, 110, ..., 210 so zu drehen, dass sie den Frachtcontainer in jede beliebige Richtung innerhalb der Ebene des Frachtdecks fördern können.

In Fig. 1 ist schematisch eine Förderrichtung durch den Vektorpfeil r der Frachtfördereinrichtung 110 angezeigt. Der Steuercomputer 20 kann beispielsweise die Frachtfördereinrichtungen 100, 110, ..., 210 derart betreiben, dass der Frachtcontainer 30 aus einer ersten Position (vgl. den ersten Frachtbodenumriss 33) in eine zweite Position (vgl. einen zweiten Frachtbodenumriss 33') gefördert wird. Es ist möglich, die einzelnen Frachtfördereinrichtungen 100, 110, ..., 210 derart selektiv anzusteuern, dass jeweils nur die Frachtfördereinrichtung 100, 110, ..., 210 betrieben wird, die mit dem Frachtcontainer 30 in Eingriff steht. Eine vom Steuercomputer 20 entwickelte Steuerstrategie kann angeben, welche Frachtfördereinrichtungen 100, 110, 120, ..., 210 zu welchem Zeitpunkt in welche Richtung betrieben werden.

Das erfindungsgemäße Frachtladesystem umfasst des Weiteren eine Vielzahl von Sensoreinrichtungen 101, 111, 121, ..., 211, um eine Istposition des Frachtcontainers 30 auf oder nahe dem Frachtdeck 10 zu ermitteln. Eine Sensoreinrichtung 101, 111, 121, ..., 211 kann einen oder mehrere Lichtsensoren 104a, 104b, 104c, 104d umfassen, die jeweils an einer Frachtfördereinrichtung 100, 110, ..., 210 angeordnet sind, um zu detektieren, ob eine bestimmte Frachtfördereinrichtung 100, 110, 120, ..., 210 von dem Frachtcontainer 30 überdeckt wird. Aufgrund der Verteilung der Sensoreinrichtungen 101, 111, 121, ..., 211 über das Frachtdeck 10 ist es möglich, eine relativ genaue Position des Frachtcontainers 30 zu ermitteln. Theoretisch wäre es möglich, andere Sensoreinrichtungen zu verwenden, um eine exaktere Position des Frachtcontainers 30 zu bestimmen. Beispielsweise könnte eine Positionsbestimmung per Ultraschall erfolgen. Signale der Sensoreinrichtungen 101, 111, ..., 211 ermöglichen es dem Steuercomputer 20, die Position des Frachtcontainers 30 zu bestimmen.

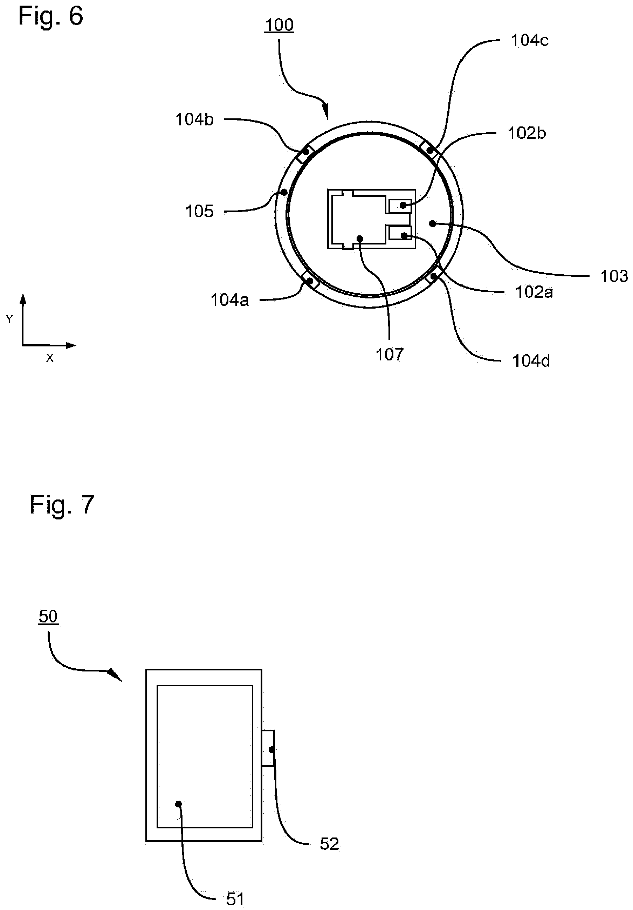

Nachfolgend werden bevorzugt verwendete Frachtfördereinrichtungen 100, 110, 120, ..., 210 anhand der Fig. 6 näher erläutert. Die Fig. 6 zeigt exemplarisch eine Detailansicht einer bevorzugten Frachtfördereinrichtung 100. Die Frachtfördereinrichtung 100 hat einen ringförmigen Rahmen 105 und einen kreisförmigen, im Rahmen 105 angeordneten Rotationsteller 103. Der Rotationsteller 103 ist derart drehbeweglich innerhalb des Rahmens 105 gelagert, dass sich dieser in der x-y-Ebene um eine Rotationsachse drehen lässt. Die Frachtfördereinrichtung 100 weist entsprechende Aktuatoren und Sensoren auf, so dass der Rotationsteller 103 innerhalb des Rahmens 105 beliebig ausgerichtet werden kann. Sensoren geben Aufschluss über die Ausrichtung des Rotationstellers 103 innerhalb des Rahmens 105.

Der Rotationsteller 103 beherbergt eine Rollenantriebseinheit 107, die die Antriebsrollen 102a, 102b antreibt. Die Antriebsrollen 102a, 102b sind dazu ausgebildet, Frachtcontainer 30 in eine Richtung quer zur Drehachse der Antriebsrollen 102a, 102b im Wesentlichen innerhalb der x-y-Ebene anzutreiben. Es sollte für den hier tätigen Fachmann offensichtlich sein, dass sich der Frachtcontainer 30 durch ein Antreiben der Antriebsrollen 102a, 102b in eine entgegengesetzte Drehrichtung in die entgegengesetzte Richtung transportieren lässt.

Die bevorzugte Frachtfördereinrichtung 100 umfasst des Weiteren vier Lichtsensoren 104a, 104b, 104c, 104d, die an dem Rahmen 105 angeordnet sind. Insofern beeinflusst die Ausrichtung des Rotationstellers 103 die Position der Lichtsensoren 104a, 104b, 104c, 104d nicht. Vorzugsweise sind die Lichtsensoren 104a, 104b, 104c, 104d jeweils auf der gegenüberliegenden Seite des Rahmens 105 angeordnet. So befindet sich der erste Lichtsensor 104a im 45-Grad-Bereich der Frachtfördereinrichtung 100, der zweite Lichtsensor 104b im 135-Grad-Bereich, der dritte Lichtsensor 104c im 225-Grad-Bereich und der vierte Lichtsensor 104d im 315-Grad-Bereich. Die Lichtsensoren 104a, 104b, 104c, 104d umfassen lichtemittierende Dioden und Photodioden, so dass die Lichtsensoren 104a, 104b, 104c, 104d dazu geeignet sind, das Vorhandensein eines Frachtstücks unmittelbar oberhalb der Lichtsensoren 104a, 104b, 104c, 104d zu detektieren.

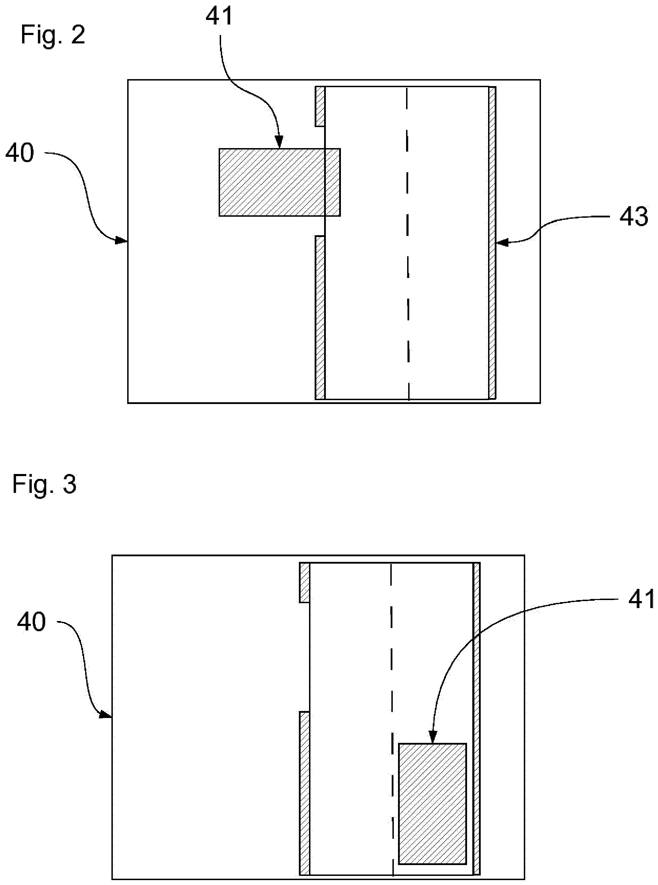

Der Steuercomputer kann die von den verteilten Sensoreinrichtungen 101, 111, ..., 211 empfangenen Sensorsignale nutzen, um die Istposition des Frachtcontainers 30 auf dem Frachtdeck 10 zu bestimmen. Des Weiteren ist der Steuercomputer 20 dazu ausgebildet, die bestimmte Istposition auf dem Touchscreen 40 anzuzeigen. Die Fig. 2 und 3 zeigen beispielhaft Darstellungen, die auf dem Touchscreen 40 erfolgen können. Vorzugsweise stellt der Touchscreen 40 des Weiteren schematisch die Ausgestaltung des Frachtdecks 10, z. B. vorhandene Türöffnungen 7, Seitenwände 1, 2, Frachtladebahnen A, B usw. dar. Entsprechende Daten können beispielsweise in einer Speichereinrichtung 21 (Fig. 4) hinterlegt sein.

In einem ersten Ausführungsbeispiel des erfindungsgemäßen Ladesystems kann ein Benutzer beispielsweise eine Abbildung 41 des Frachtcontainers 30 in Fig. 2 mittels eines Fingers auswählen und dann eine Zielposition durch das Bewegen des Fingers beispielsweise auf die Abbildung der Frachtladebahn A oder B vorgeben. Der Steuercomputer 20 empfängt diese Eingabe und berechnet eine geeignete Förderstrategie, so dass der Frachtcontainer 30 auf dem Frachtdeck 10 in geeigneter Weise in die vorgegebene Position gefördert wird. Fig. 3 zeigt beispielsweise eine Abbildung 41 des Frachtcontainers 30 in der Zielposition. Zur Entwicklung einer geeigneten Steuerstrategie umfasst der Steuercomputer 20 eine Modellgeneratoreinheit 22 (Fig. 4). Diese Modellgeneratoreinheit 22 verfügt über die notwendigen Daten, um die Ausgestaltung des Frachtdecks 10 digital zu modellieren. Des Weiteren stehen geeignete Abmessungen des Frachtcontainers 30, beispielsweise die Frachtcontainerbreite b und die Frachtcontainerlänge l zur Verfügung, so dass auch der Frachtcontainer 30 in geeigneter Weise modelliert werden kann. Der Steuercomputer 20 entwickelt nach der Modellierung des Frachtcontainers 30 und des Frachtdecks 10 eine Steuerstrategie, die derart gewählt ist, dass der Frachtcontainer 30 bei dessen Beförderung keinen Kontakt mit der Außenhaut des Flugzeugs hat.

Vorzugsweise ist der Steuercomputer 20 derart ausgebildet, dass eine tatsächliche Umsetzung der entwickelten Steuerstrategie nur so lange erfolgt, so lange der Touchscreen 40 eine Berührung des Benutzers detektiert. Sobald kein Kontakt zu dem Touchscreen 40 vorliegt, wird der Frachtcontainer 30 gestoppt. Der Benutzer kann den Transport des Frachtcontainers also jederzeit stoppen, indem er den oder die Finger vom Touchscreen 40 nimmt.

In einem zweiten Ausführungsbeispiel ist es möglich, den Frachtcontainer 30 durch entsprechende Eingaben an dem Touchscreen 40 abschnittsweise zu bewegen. Beispielsweise kann der Benutzer die Abbildung 41 des Frachtcontainers 30 aus Fig. 2 auswählen und den Frachtcontainer 30 in einer Art drag-and-drop-Verfahren bewegen. Der Steuercomputer 20 nimmt diese Eingaben auf und setzt sie in geeigneter Weise um, so dass der Frachtcontainer 30 auf dem Frachtdeck 10 entsprechend transportiert wird.

Vorzugsweise ist der Steuercomputer 20 derart ausgebildet, dass er sowohl eine automatische Be- und Entladung (vgl. erstes Ausführungsbeispiel) und eine manuelle Be- und Entladung (vgl. zweites Ausführungsbeispiel) bereitstellt. Beispielsweise kann der Steuercomputer 20 es ermöglichen, Frachtcontainer 30 mit standardisierten Abmessungen automatisch zu verladen, während Frachtcontainer 30 mit vom Standard abweichenden Normen oder mit einem Überstand manuell verladen werden.

Vorzugsweise ist der Touchscreen 40 derart ausgebildet, dass er mindestens zwei Berührungen des Touchscreens 40 gleichzeitig detektieren kann. Es ist also möglich, entsprechende Benutzereingaben durch zwei Finger gleichzeitig vorzunehmen. Beispielsweise wäre es denkbar, die Abbildung 41 des Frachtcontainers in Fig. 2 am vorderen und hinteren Ende gleichzeitig zu berühren und eine Translations- und/oder Rotationsbewegung vorzugeben, so dass der Frachtcontainer 30 im Endeffekt eine Position einnimmt, wie diese anhand des ersten Frachtbodenumrisses 33 aus Fig. 1 verdeutlicht wird. Ein entsprechend ausgestalteter Touchscreen 40 ist besonders dafür geeignet, Rotationsbewegungen vorzugeben. Auch in diesem Ausführungsbeispiel kann das Fehlen eines Kontakts zum Touchscreen 40 zum Stoppen des Frachtcontainers 30 führen (vgl. erstes Ausführungsbeispiel).

Theoretisch ist es möglich, den Steuercomputer 20 vollständig durch die Eingaben auf dem Touchscreen 40 zu steuern. Andererseits wäre es auch möglich, eine weitere Eingabeeinrichtung 24 bereitzustellen, die weitere Steuerbefehle zur Verfügung stellt. Auch kann eine RFID-Sensoreinrichtung 25 (vgl. Fig. 1 und 4) am Eingangsbereich des Frachtdecks 10 vorgesehen werden, um Informationen bezüglich des zu ladenden Frachtcontainers 30 zu ermitteln.

Weiterhin kann eine Fernbedienung 50 (vgl. Fig. 7) vorgesehen werden, um weitere Benutzereingaben für den Steuercomputer 20 bereitzustellen. Bei dieser Fernbedienung 50 kann es sich um eine herkömmliche Fernbedienung mit einer Vielzahl von Knöpfen und/oder anderen Eingabeelementen handeln. Alternativ kann die Fernbedienung 50 eine Anzeigeeinrichtung 51 aufweisen, die z.B. als Touchscreen ähnlich dem Touchscreen 40 ausgebildet ist. Eine drahtlose Kommunikation zwischen dem Steuercomputer 20 und der Fernbedienung 50 kann auf jede erdenkliche Weise hergestellt werden. Vorzugsweise erfolgt die Kommunikation über Lichtwellen, die von geeigneten Sendeeinheiten ausgegeben und von geeigneten Empfangseinheiten empfangen werden. Beispielsweise kann die Kommunikation im Infrarotbereich stattfinden. In einer bevorzugten Ausgestaltung dienen einer oder mehrere der Lichtsensoren 104a, 104b, 104c, 104d als Sende- und/oder Empfangseinheit zur Kommunikation mit der Fernbedienung 50. Die Benutzereingaben werden dann kabelgebunden oder kabellos von der entsprechenden Frachtfördereinrichtung 100, 110, 120, ..., 210 an den Steuercomputer 20 weitergeleitet.

Es ist möglich, ein zweidimensionales oder dreidimensionales Modell des zu ladenden Frachtcontainers 30 aufgrund von manuellen Eingaben zu ermitteln. So kann das erfindungsgemäße Ladesystem beispielsweise in der Speichereinrichtung 21 zwei- oder dreidimensionale Modelle sämtlicher gängiger Frachtcontainermodelle gespeichert haben. Der Benutzer des erfindungsgemäßen Ladesystems kann dann den zu ladenden Frachtcontainer 30 beispielsweise aus einer Liste auswählen. Andererseits kann eine automatische Erfassung des Frachtcontainermodells bzw. der Frachtcontainerart erfolgen. Beispielsweise können entsprechende Daten, die zur Erstellung eines zwei- oder dreidimensionalen Modells des Frachtcontainers 30 notwendig sind, in einem RFID-Tag 34 (vgl. Fig. 5) gespeichert werden. Der Steuercomputer 20 kann anhand der gespeicherten Daten ein geeignetes Modell erstellen und dann eine geeignete Steuerstrategie entwickeln.

Obwohl der vorab beschriebene Touchscreen 40 fest an der Seitenwand 1 installiert ist, ist es möglich, die Erfindung in Form eines tragbaren Touchscreens 40 umzusetzen. Die Kommunikation mit dem Steuercomputer kann drahtgebunden, drahtlos (z.B. via Bluetooth) oder teilweise drahtlos erfolgen. Für einen tragbaren Touchscreen 40 können Halterungen an den Seitenwänden 1, 2 angebracht werden, die optional auch als Ladestationen fungieren.

### Bezugszeichenliste

- 1, 2: Seitenwand
- 5: Mittelebene
- 7: Türöffnung
- 10: Frachtdeck
- 11, 11', 11", 11"': Mittelriegel
- 20: Steuercomputer
- 21: Speichereinrichtung
- 22: Modellgenerator
- 24: Eingabeeinrichtung
- 25: RFID-Sensoreinrichtung
- 30: Frachtcontainer
- 31: Frachtboden
- 33, 33', 33": Frachtbodenumrisse
- 34: RFID-Tag
- 40: Touchscreen
- 41: Abbildung des Frachtcontainers
- 43: Abbildung des Frachtdecks
- 50: Fernbedienung
- 51: Anzeigeeinrichtung
- 52: Sendeeinrichtung
- 100, 110, 120, ..., 210: Frachtfördereinrichtung
- 101, 111, 121, ..., 211: Sensoreinrichtungen
- 102a, 102b: Antriebsrollen
- 103: Rotationsteller
- 104a, 104b, 104c, 104d: Lichtsensor
- 105: Rahmen
- 107: Rollenantriebseinheit
- X, Y: X- bzw. Y-Richtung
- A: Frachtladebahn A
- B: Frachtladebahn B
- r: Förderrichtung
- b: Frachtcontainerbreite
- l: Frachtcontainerlänge

## Patentansprüche

1. Ladesystem für ein Flugzeug, umfassend:
- einen Steuercomputer (20);
- eine Vielzahl von Frachtfördereinrichtungen (100, 110, ..., 210) zum Befördern eines Frachtstücks (30) auf einem Frachtladedeck (10) des Flugzeugs, wobei der Steuercomputer (20) zur Ansteuerung der Frachtfördereinrichtungen (100, 110, ..., 210) kommunikativ mit den Frachtfördereinrichtungen (100, 110, ..., 210) verbunden ist;
- mindestens eine Eingabeeinrichtung, die kommunikativ mit dem Steuercomputer (20) verbunden ist, um Benutzereingaben an den Steuercomputer (20) weiterzuleiten;
wobei
die mindestens eine Eingabeeinrichtung einen Touchscreen (40) umfasst, **dadurch gekennzeichnet, dass**
der Touchscreen (40) derart vom Steuercomputer (30) angesteuert wird, dass der Touchscreen (40) zumindest einen Umriss des Frachtstücks (30) anzeigt, wobei das Ladesystem dazu ausgebildet ist, dass ein Benutzer des Ladesystems mittels des Touchscreens (40) den Umriss des Frachtstücks (30) oder einen Abschnitt des Umrisses des Frachtstücks (30) auswählen und zumindest eine Förderrichtung und/oder eine Förderbahn vorgeben kann.

2. Ladesystem nach Anspruch 1,
**gekennzeichnet durch**
Sensoreinrichtungen (101, 111, 121, ..., 211) zur Erfassung einer Istposition des Frachtstücks (30).

3. Ladesystem nach einem der vorhergehenden Ansprüche,
**dadurch gekennzeichnet, dass**
das Ladesystem dazu ausgebildet ist, dass der Benutzer eine Förderrichtung vorgeben kann.

4. Ladesystem nach einem der vorhergehenden Ansprüche,
**dadurch gekennzeichnet, dass**
der Touchscreen (40) dazu ausgebildet ist, mindestens zwei Berührungspunkte zeitgleich zu erfassen, so dass ein Benutzer des Ladesystems eine Rotationsbewegung vorgeben kann.

5. Ladesystem nach einem der vorhergehenden Ansprüche,
**dadurch gekennzeichnet, dass**
der Steuercomputer (20) dazu ausgebildet ist, unter Berücksichtigung der Benutzereingaben eine Förderstrategie zu berechnen und die Frachtfördereinrichtungen (100, 110, ..., 210) zur Umsetzung der Förderstrategie zu betreiben.

6. Ladesystem nach einem der vorhergehenden Ansprüche,
**dadurch gekennzeichnet, dass**
der Steuercomputer (20) dazu ausgebildet ist, die Frachtfördereinrichtungen (100, 110, ..., 210) nur so lange zu betreiben, solange von dem Touchscreen (40) eine Berührung durch den Benutzer detektiert wird.

7. Ladesystem nach einem der vorhergehenden Ansprüche,
**dadurch gekennzeichnet, dass**
der Touchscreen (40) derart ausgebildet ist und/oder vom Steuercomputer (20) angesteuert wird, dass ein Benutzer des Ladesystems mittels des Touchscreens (40) zumindest eine Zielposition auswählen kann.

8. Ladesystem nach Anspruch 7,
**dadurch gekennzeichnet, dass**
der Steuercomputer (20) dazu ausgebildet ist, eine Steuerstrategie zu berechnen, um die Frachtfördereinrichtungen (100, 110, ..., 210) derart zu betreiben, dass das Frachtstück (30) aus dessen Istposition in die Zielposition bewegt wird.

9. Ladesystem nach einem der vorhergehenden Ansprüche,
**gekennzeichnet durch**
Sensoreinrichtungen (25) zur Erfassung der Frachtstückart und/oder einer Abmessung des Frachtstücks (30).

10. Verfahren zur Förderung eines Frachtstücks (30) auf einem Frachtdeck (10), umfassend die Schritte:
- Empfangen mindestens einer mittels eines Touchscreens (40) eingegebenen Benutzereingabe durch einen Steuercomputer (20), wobei das Empfangen ein Empfangen mindestens einer Auswahl eines Abschnitts eines Umrisses des Frachtstücks (30) umfasst;
- Berechnen einer Steuerstrategie in Abhängigkeit von der Benutzereingabe durch den Steuercomputer (20);
- Betreiben einer Anzahl von Frachtfördereinrichtungen (100, 110, ..., 210) gemäß der Steuerstrategie durch den Steuercomputer (20).

11. Verfahren nach Anspruch 10,
**gekennzeichnet durch**
ein Empfangen einer Vielzahl von Sensorsignalen zur Bestimmung einer Istposition des Frachtstücks (30) auf dem Frachtdeck (10) durch den Steuercomputer (20); und
ein Anzeigen der Istposition des Frachtstücks (30) auf dem Touchscreen (40).

12. Verfahren nach einem der Ansprüche 10 oder 11,
**dadurch gekennzeichnet, dass**
das Betreiben der Anzahl von Frachtfördereinrichtungen (100, 110, ..., 210) nur so lange erfolgt, solange der Touchscreen (40) eine Berührung des Benutzers detektiert.

13. Verfahren nach einem der Ansprüche 10 bis 12,
**gekennzeichnet durch**
ein Erfassen einer Frachtstückart und/oder zumindest einer Abmessung des Frachtstücks (30) durch mindestens eine Sensoreinrichtung und
ein Berücksichtigen der Frachtstückart und/oder der Abmessung bei der Berechnung der Steuerstrategie.

14. Verfahren nach einem der Ansprüche 10 bis 13,
**dadurch gekennzeichnet, dass**
die Benutzereingabe eine Eingabe einer Beschleunigungsrichtung und einer Beschleunigungskraft umfasst und der Steuercomputer (20) anhand der Benutzereingabe eine Förderrichtung und einen Förderzeitraum bestimmt.

15. Ladesystem nach einem der Ansprüche 1 bis 9,
**gekennzeichnet durch**
eine Fernbedienung (50), die zum Empfangen von Benutzereingaben ausgebildet ist und eine drahtlose Kommunikationsschnittstelle (52) aufweist, um die Benutzereingaben mittels eines Sensors einer Frachtfördereinrichtung (100, 110, ..., 210) an den Steuercomputer (20) weiterzuleiten.

## Claims

1. Loading system for an aircraft, comprising:
- a control computer (20);
- a multitude of cargo conveying means (100, 110, ..., 210) for conveying a piece of cargo (30) on a cargo loading deck (10) of the aircraft, wherein the control computer (20) is communicatively coupled to the cargo conveying means (100, 110, ..., 210) for controlling the cargo conveying means (100, 110, ..., 210);
- at least one input device communicatively coupled to the control computer (20) to forward user inputs to the control computer (20);
wherein
the at least one input device comprises a touch screen (40),
**characterized in that**
the touch screen (40) is controlled by the control computer (20) in such a way that the touch screen (40) displays at least one outline of the piece of cargo (30), wherein the loading system is configured to enable a user of the loading system to select the outline of the piece of cargo (30) or at least a portion of the outline of the piece of cargo (30) and to define at least one conveying direction and/or one conveying track by means of the touch screen (40).

2. Loading system according to claim 1,
**characterized by**
sensor means (101, 111, 121, ..., 211) for detecting an actual position of the piece of cargo (30).

3. Loading system according to anyone of the preceding claims,
**characterized in that**
the loading system is configured to enable the user to define a conveying direction.

4. Loading system according to anyone of the preceding claims,
**characterized in that**
the touch screen (40) is configured to simultaneously detect at least two points of contact so that a user of the loading system can define a rotational movement.

5. Loading system according to anyone of the preceding claims,
**characterized in that**
the control computer (20) is configured to calculate a conveying strategy while taking into account the user inputs and to operate the cargo conveying means (100, 110, ..., 210) for implementing the conveying strategy.

6. Loading system according to anyone of the preceding claims,
**characterized in that**
the control computer (20) is configured to operate the cargo conveying means (100, 110, ..., 210) only until the touch screen (40) detects a touch action by the user.

7. Loading system according to anyone of the preceding claims,
**characterized in that**
the touch screen (40) is configured and/or controlled by the control computer (20) in such a way that the user of the loading system may select at least one target position by the touch screen (40).

8. Loading system according to claim 7,
**characterized in that**
the control computer (20) is configured to calculate a control strategy in order to operate the cargo conveying means (100, 110, ..., 210) such that the piece of cargo (30) is moved from its actual position to the target position.

9. Loading system according to anyone of the preceding claims,
**characterized by**
sensor means (25) for detecting the piece of cargo type and/or a dimension of the piece of cargo (30).

10. Method for conveying a piece of cargo (30) on a cargo deck (10) comprising the steps of:
- receiving, by the control computer (20), at least one user input that has been input by means of a touch screen (40), wherein the receiving includes receiving at least one selection of a portion of an outline of the piece of cargo (30);
- calculating, by the control computer (20), a control strategy as a function of the user input;
- operating, by the control computer (20), a number of cargo conveying means (100, 110, ..., 210) according to the control strategy.

11. Method according to claim 10,
**characterized by**
receiving a multitude of sensor signals for determining an actual position of the piece of cargo (3) on the cargo deck (10) by the control computer (20); and
displaying the actual position of the piece of cargo (30) on the touch screen (40).

12. Method according to anyone of claims 10 or 11,
**characterized in that**
the operating of the number of cargo conveying means (100, 110, ..., 210) is performed only until the touch screen (40) detects a touch action of the user.

13. Method according to anyone of claims 10 to 12,
**characterized by**
detecting a piece of cargo type and/or at least one dimension of the piece of cargo by at least one sensor means and taking into account the piece of cargo type and/or the dimension in calculating the control strategy.

14. Method according to anyone of claims 10 to 13,
**characterized in that**
the user input includes inputting an acceleration direction and an acceleration force, and the control computer (20) determines a conveying direction and a conveying period based on the user input.

15. Loading system according to anyone of claims 1 to 9,
**characterized by**
a remote control unit (50) configured to receive user inputs and having a wireless communication interface (52) for forwarding the user inputs by means of a sensor of a cargo conveying means (100, 110, ..., 210) to the control computer (20).

## Revendications

1. Système de chargement pour un avion, comportant :
- un ordinateur de commande (20) ;
- une multitude de convoyeurs de fret (100, 110, ..., 210) pour convoyer un colis (30) sur un pont de chargement (10) de l'avion, dans lequel l'ordinateur de commande (20) est relié de façon communicative aux convoyeurs de fret (100, 110, ..., 210) pour piloter les convoyeurs de fret (100, 110, ..., 210);
- au moins un dispositif d'entrée connecté de façon communicative à l'ordinateur de commande (20) pour transmettre à l'ordinateur de commande (20) des données entrées par un utilisateur ;
dans lequel
ledit au moins un dispositif d'entrée comprend un écran tactile (40), **caractérisé en ce que**
l'écran tactile (40) est piloté par l'ordinateur de commande (30) de telle sorte que l'écran tactile (40) affiche au moins un contour du colis (30), le système de chargement étant réalisé pour qu'un utilisateur du système de chargement puisse choisir le contour du colis (30) ou une partie du contour du colis (30) au moyen de l'écran tactile (40) et imposer au moins une direction de convoyage et/ou une voie de convoyage.

2. Système de chargement selon la revendication 1,
**caractérisé par**
des moyens capteurs (101, 111, 121, ..., 211) pour détecter une position réelle du colis (30).

3. Système de chargement selon l'une des revendications précédentes,
**caractérisé en ce que**
le système de chargement est réalisé pour que l'utilisateur puisse imposer une direction de convoyage.

4. Système de chargement selon l'une des revendications précédentes,
**caractérisé en ce que**
l'écran tactile (40) est réalisé pour détecter au moins deux points de contact physique en même temps, de sorte qu'un utilisateur du système de chargement peut imposer un mouvement de rotation.

5. Système de chargement selon l'une des revendications précédentes,
**caractérisé en ce que**
l'ordinateur de commande (20) est réalisé pour calculer une stratégie de convoyage en prenant en compte des données entrées par l'utilisateur et pour faire fonctionner les convoyeurs de fret (100, 110, ..., 210) pour mettre en oeuvre la stratégie de convoyage.

6. Système de chargement selon l'une des revendications précédentes,
**caractérisé en ce que**
l'ordinateur de commande (20) est réalisé pour ne faire fonctionner les convoyeurs de fret (100, 110, ..., 210) qu'aussi longtemps que l'écran tactile (40) détecte un contact physique par l'utilisateur.

7. Système de chargement selon l'une des revendications précédentes,
**caractérisé en ce que**
l'écran tactile (40) est réalisé et/ou est piloté par l'ordinateur de commande (20) de telle sorte qu'un utilisateur du système de chargement peut choisir au moins une position cible au moyen de l'écran tactile (40).

8. Système de chargement selon la revendication 7,
**caractérisé en ce que**
l'ordinateur de commande (20) est réalisé pour calculer une stratégie de commande pour faire fonctionner les convoyeurs de fret (100, 110, ..., 210) de telle sorte que le colis (30) est déplacé de sa position réelle jusque dans la position cible.

9. Système de chargement selon l'une des revendications précédentes,
**caractérisé par**
des moyens capteurs (25) pour détecter le type de colis et/ou une dimension du colis (30).

10. Procédé pour convoyer un colis (30) sur un pont de chargement (10), comprenant les étapes consistant à :
- recevoir par un ordinateur de commande (20) au moins une donnée entrée par l'utilisateur au moyen d'un écran tactile (40), la réception comprenant une réception d'au moins une sélection d'une portion d'un contour du colis (30) ;
- calculer par l'ordinateur de commande (20) une stratégie de commande en fonction de la donnée entrée par l'utilisateur ;
- faire fonctionner par l'ordinateur de commande (20) un certain nombre de convoyeurs de fret (100, 110, ..., 210) selon la stratégie de commande.

11. Procédé selon la revendication 10,
**caractérisé par**
une réception d'une multitude de signaux de capteur pour déterminer par l'ordinateur de commande (20) une position réelle du colis (30) sur le pont de chargement (10) ; et
un affichage sur l'écran tactile (40) de la position réelle du colis (30).

12. Procédé selon l'une des revendications 10 ou 11,
**caractérisé en ce que** le fonctionnement du certain nombre de convoyeurs de fret (100, 110, ..., 210) ne s'effectue qu'aussi longtemps que l'écran tactile (40) détecte un contact physique de l'utilisateur.

13. Procédé selon l'une des revendications 10 à 12,
**caractérisé par**
une détection d'un type de colis et/ou d'au moins une dimension du colis (30) par au moins un dispositif capteur, et
une prise en compte du type de colis et/ou de la dimension lors du calcul de la stratégie de commande.

14. Procédé selon l'une des revendications 10 à 13,
**caractérisé en ce que**
la donnée entrée par l'utilisateur comprend une donnée entrée d'une direction d'accélération et d'une force d'accélération et l'ordinateur de commande (20) détermine une direction de convoyage et un intervalle temporel de convoyage en se basant sur la donnée entrée par l'utilisateur.

15. Système de chargement selon l'une des revendications 1 à 9,
**caractérisé par**
une télécommande (50) qui est réalisée pour recevoir des données entrées par l'utilisateur et qui présente une interface de communication sans fil (52) pour acheminer les données entrées par l'utilisateur à l'ordinateur de commande (20) au moyen d'un capteur d'un convoyeur de fret (100, 110, ..., 210).
